# EUROPÄISCHE PATENTSCHRIFT

(11) **EP 2 483 094 B1**
(45) Veröffentlichungstag und Bekanntmachung des Hinweises auf die Patenterteilung: **15.07.2015**
(21) Anmeldenummer: 11764565.5
(22) Anmeldetag: 05.10.2011
(51) Int. Cl.: B60J 7/02

(54) **RAHMEN EINES ÖFFNUNGSFÄHIGEN FAHRZEUGDACHES UND VERFAHREN ZUR MONTAGE EINES RAHMENS EINES ÖFFNUNGSFÄHIGEN FAHRZEUGDACHES**
FRAME OF AN OPENABLE VEHICLE ROOF AND METHOD FOR MOUNTING A FRAME OF AN OPENABLE VEHICLE ROOF
CADRE D'UN TOIT OUVRANT DE VÉHICULE ET PROCÉDÉ DE MONTAGE D'UN CADRE DE TOIT OUVRANT DE VÉHICULE

(30) Priorität: 15.12.2010 DE 102010054590
(43) Veröffentlichungstag der Anmeldung: 08.08.2012
(73) Patentinhaber: Webasto AG, 82131 Stockdorf (DE)
(72) Erfinder: WEYL, Peter, 82131 Stockdorf (DE); HIRVONEN, Mattias, 80639 München (DE)
(74) Vertreter: Epping - Hermann - Fischer
(86) Internationale Anmeldenummer: PCT/EP2011/067379
(87) Internationale Veröffentlichungsnummer: WO 2012/079799

(56) Entgegenhaltungen:
- EP-A1- 1 279 537
- WO-A1-2005/021306
- DE-U1- 29 801 276
- US-A- 5 902 008

## Beschreibung

Die Erfindung betrifft einen Rahmen eines öffnungsfähigen Fahrzeugdaches mit zwei seitlich einer Dachöffnung verlaufenden Rahmenteilen, die jeweils durch ein am hinteren Ende des Rahmenteils angeordnetes Endstück begrenzt sind. Außerdem betrifft die Erfindung ein Verfahren zur Montage eines Endstückes an einem seitlichen Rahmenteil.

Ein derartiger Rahmen ist aus der DE 4330582 C1 bekannt. Dort wird ein als Kunststoffspritzteil ausgebildetes Endstück auf das seitliche Rahmenteil aufgesteckt. Das Endstück weist eine Kammer auf, welche dazu vorgesehen ist, Wasser aufzunehmen, welches durch Kanäle im seitlichen Rahmenteil zu dem Endstück gelangt. An dem Endstück ist ein Anschlussstück zur Befestigung eines Wasserablaufschlauches vorgesehen.

Durch das Endstück werden zwar die Wasserkanäle abgeschlossen, ansonsten ist der Rahmen nach hinten aber offen, insbesondere für ein aufgenommenes Schiebehimmelelement.

Die US 5,902,008 A beschreibt einen Rahmen für ein Schiebdach mit einem Endstück, das ein Stoppelement aufweist.

Der Erfindung liegt die Aufgabe zugrunde, einen Rahmen eines öffnungsfähigen Fahrzeugdaches anzugeben, bei welchem ein aufgenommenes Schiebehimmelelement gegen Herausrutschen gesichert ist, sowie ein Verfahren zur Montage eines derartigen Rahmens anzugeben.

Diese Aufgabe wird durch einen Rahmen der eingangs genannten Art gelöst, welcher dadurch gekennzeichnet ist, dass an das Endstück ein federnd gelagertes Stoppelement angeformt ist, welches sich in den Bereich zwischen den Rahmenteilen erstreckt.

Das erfindungsgemäße Stoppelement ist dafür vorgesehen, ein zwischen den Rahmenteilen aufgenommenes Schiebeelement insbesondere eines Schiebehimmels gegen ein Herausrutschen aus den seitlichen Rahmenteilen zu sichern. Durch die federnde Lagerung ist es möglich, zuerst die Endstücke zu montieren und danach das Schiebehimmelelement einzuführen. Dadurch ist es möglich, den Rahmen fertig zu montieren ohne die Farbe zu kennen, welche das Schiebehimmelelement aufweisen soll. Die montierten Rahmen sind somit universell einsetzbar. Insbesondere ist es auch möglich, bei einem im Fahrzeug montierten Rahmen nachträglich das Schiebehimmelelement auszutauschen, ohne den Rahmen beziehungsweise die Rahmenendstücke demontieren zu müssen. An einem Basiselement des Endstücks ist ein Arm angeformt, an dessen anderem Ende das Stoppelement angeformt ist, so dass das Basiselement, der Arm und das Stoppelement einstückig ausgebildet sind. Der Arm ist in Fahrzeuglängsrichtung steifer als senkrecht zur Ebene der Dachöffnung.

Gemäß einer vorteilhaften Weiterbildung der Erfindung weisen die Endstücke jeweils das Basiselement auf, welches an dem seitlichen Rahmenteil befestigt ist, und weisen zudem ein Abdeckelement auf, welches in einer montierten Position an einem seitlichen Rahmenteil derart angeordnet ist, dass am hinteren Ende des seitlichen Rahmenteils eine Kammer gebildet ist.

Ein erfindungsgemäßes Verfahren ist im nebengeordneten Anspruch angegeben.

Ein erfindungsgemäß weitergebildetes Verfahren zur Montage eines Endstückes an einem Rahmenseitenteil weist den zusätzlichen Schritt auf: Aufsetzen eines Abdeckelementes auf das seitliche Rahmenteil, so dass durch das seitliche Rahmenteil, das Basiselement und das Abdeckelement eine Kammer gebildet wird. Dieser Schritt kann erfolgen, nachdem das Endstück an dem seitlichen Rahmenteil befestigt wurde. Es ist eine Ausführung dieses Schritts unmittelbar nach dem Aufsetzen des Endstücks auf ein seitliches Rahmenteil möglich, aber auch zu jedem beliebigen späteren Zeitpunkt.

Durch das erfindungsgemäß weitergebildete Verfahren wird sichergestellt, dass eine abgedichtete Kammer entsteht und insbesondere eine an das Abdeckelement angeformte Dichtung nicht durch Scherung beschädigt wird.

Bei dem erfindungsgemäß weitergebildeten Rahmen ist die Kammer also nicht allein durch das Endstück gebildet, sondern die Kammer entsteht durch ein Zusammenwirken des seitlich verlaufenden Rahmenteils mit dem Abdeckelement des Endstückes. Dadurch kann eine kompaktere Bauform erreicht werden. Zudem ist eine solche Anordnung stabiler, da das Endstück nicht so weit über das seitlich verlaufende Rahmenteil hinausragt, so dass bei einer unabsichtlichen Krafteinwirkung auf das Endstück eine kleinere Hebelwirkung eintritt.

In einer vorteilhaften Weiterbildung der Erfindung ist das Abdeckelement beweglich mit dem Basiselement verbunden. Dies kann besonders vorteilhaft durch ein Filmscharnier erfolgen. Der Vorteil dabei ist, dass eine Dichtung, welche an das Abdeckelement angeformt ist, beim Aufschieben des Endstückes nicht geschert wird und so eine Beschädigung der Dichtung vermieden wird. Nach dem Aufstecken des Basiselementes auf ein Rahmenteil wird in einem weiteren Montageschritt das Abdeckelement heruntergeklappt und dabei mit den Dichtungen gegen das Rahmenteil gepresst. In dieser Position wird es vorteilhafterweise verrastet, so dass eine sichere Befestigung mit einer guten Abdichtung gegenüber dem Rahmenteil gewährleistet ist.

In einer anderen vorteilhaften Ausgestaltung ist das Abdeckelement als zusätzliches Teil ausgebildet, welches nach der Montage des Basisteiles aufgesetzt wird, um in Verbindung mit dem seitlichen Rahmenteil und dem Basiselement eine Kammer zu bilden.

Weitere vorteilhafte Ausgestaltungen der Erfindung sind in den Unteransprüchen angegeben. Die Erfindung wird nachfolgend anhand eines Ausführungsbeispieles näher erläutert.

Es zeigt:
Figur 1 einen erfindungsgemäßen Rahmen mit an den hinteren Enden seitlicher Rahmenteile montierten Endstücken,
Figur 2 eine Darstellung des hinteren Bereichs eines seitlichen Rahmenteiles sowie eines Endstückes vor der Montage,
Figur 3 eine Darstellung der Komponenten von Figur 2 nach dem Zusammenstecken,
Figur 4 das montierte Endstück von Figur 3 nach dem Aufsetzen des Abdeckelementes,
Figur 5 das montierte Endstück aus Blickrichtung des seitlichen Rahmenteils,
Figur 6 ein Detail der Dichtungsanordnung in einer Schnittansicht,
Figur 7 eine weitere Detaildarstellung der Dichtungsanordnung und
Figur 8 eine perspektivische Darstellung eines erfindungsgemäßen Rahmens mit aufgenommenem Schiebehimmelelement.

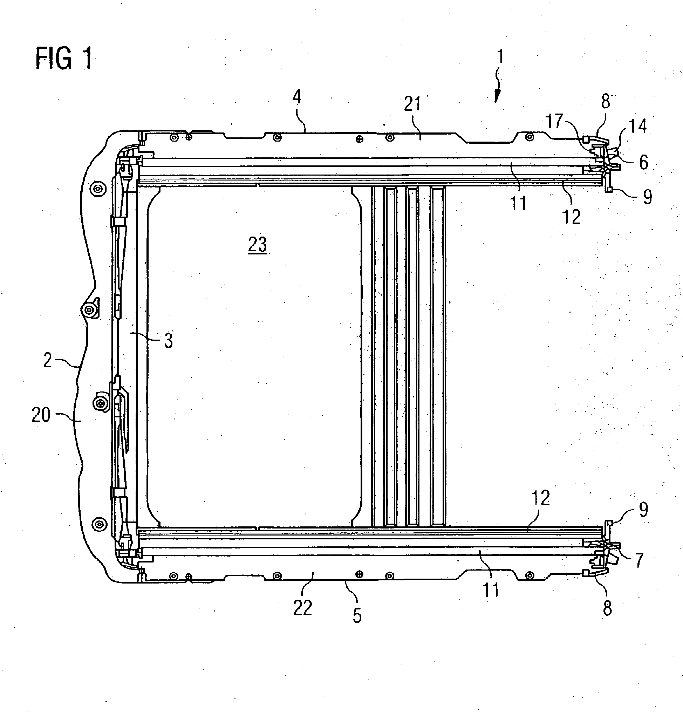

In der Figur 1 ist ein Rahmen 1 eines öffnungsfähigen Daches dargestellt. Der Rahmen weist Befestigungsabschnitte 20, 21 und 22 auf, über die der Rahmen am Dach des Fahrzeugs befestigt werden kann. An der Frontseite 2 des Rahmens ist ein quer liegendes erstes Rahmenteil 3 vorgesehen, an dem zwei seitlich verlaufende Rahmenteile 4 und 5 befestigt sind. An ihrem hinteren Ende sind die seitlichen Rahmenteile 4 und 5 durch Endstücke 6 und 7 abgeschlossen. Diese Endstücke bestehen aus einem Kunststoffspritzteil und sind auf die seitlichen Rahmenteile aufgesteckt. Insbesondere sind durch die Endstücke 6 und 7 Wasserkanäle 11 und Führungsschienen 12 abgeschlossen.

Die Wasserkanäle 11 der seitlichen Rahmenteile 4 und 5 dienen dazu, von oben eindringendes Wasser nach hinten zu leiten und dort in einer Kammer aufzufangen. Aus der Kammer wird das Wasser über Schläuche abgeleitet, die an ein Anschlussstück 14 an jedem Endstück angeschlossen sind. Aufgrund der Ableitung des Wassers ist es erforderlich, dass die Kontaktstellen zwischen dem Endstück 6 und 7 und den seitlichen Rahmenteilen 4 und 5 wasserdicht ausgebildet sind. Andernfalls könnte Wasser an dieser Stelle aus den Wasserkanälen 11 herauslaufen und ins Fahrzeuginnere gelangen.

Zudem sind an den Endstücken 6 und 7 Stoppelemente 9 ausgebildet, welche die Führungsschienen 12 nach hinten begrenzen. Dadurch wird verhindert, dass ein bewegliches Dachteil 23 wie ein Schiebehimmelelement nach hinten verschoben wird und dort aus den Führungsschienen 12 herausrutscht.

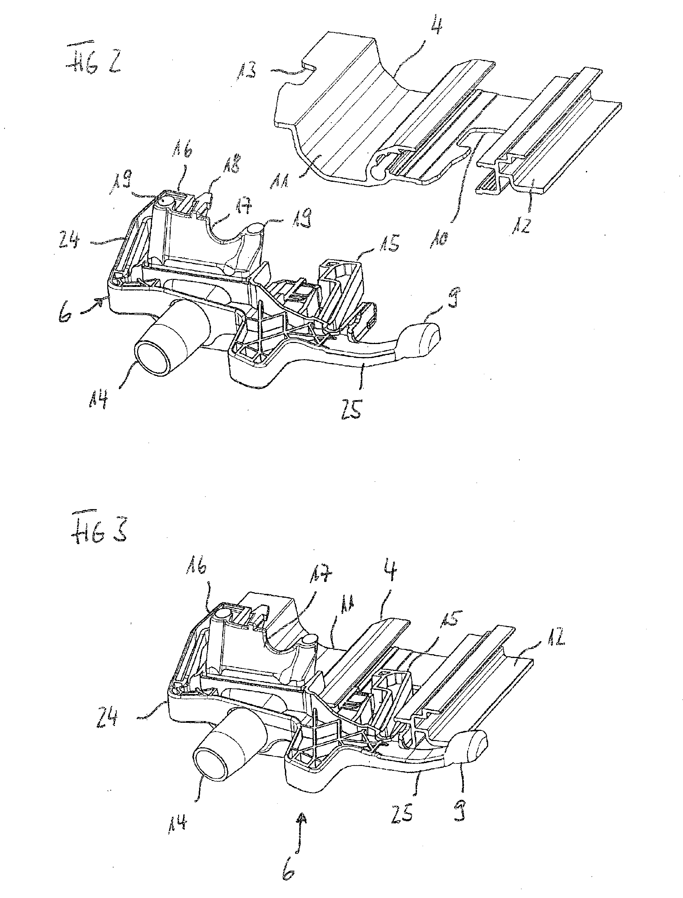

Die Figur 2 zeigt eine detailliertere Darstellung eines Endstückes 6 und eines seitlichen Rahmenteiles 4, bevor das Endstück auf das seitliche Rahmenteil 4 aufgesteckt wurde. Beidseitig des Wasserkanals 11 sind Ausnehmungen 10 und 13 vorgesehen, welche zur Zusammenwirkung mit Rastelementen 15 und 16 des Endstückes 6 ausgebildet sind. Beim Zusammenstecken werden die Rastelemente 15 und 16 in diesen Ausnehmungen einrasten und so eine sichere kraftschlüssige Verbindung zwischen dem Endstück 6 und dem seitlichen Rahmenteil 4 ermöglicht. Abgesehen von der Ausnehmung 10 ist das seitliche Rahmenteil 4 gerade abgeschnitten, was einfach und kostengünstig zu bewerkstelligen ist.

Das Endstück 6 ist in Figur 2 ebenfalls im Detail dargestellt. Es wird von hinten auf das seitliche Rahmenteil 4 aufgesteckt und verrastet über zwei Schnapper 15 und 16 mit den Ausnehmungen 10 und 13 des seitlichen Rahmenteils 4. An der dem Rahmenteil 4 zugewandten Seite des Endstückes 6 sind geeignet geformte Flächen vorgesehen, die im montierten Zustand des Endstückes den hinteren Kanten des Wasserkanals 11 gegenüber liegen. An diesen Flächen sind Dichtungen vorgesehen, was in der Figur 2 jedoch nicht zu erkennen ist. Dadurch ist im montierten Zustand der Wasserkanal 11 nach hinten dicht abgeschlossen. Die einzige verbleibende Öffnung führt durch das Anschlussstück 14, wo ein Wasserablaufschlauch angeschlossen werden kann.

Um die zu bildende Kammer nach oben abzuschließen, ist ein Abdeckelement 17 vorgesehen, welches über ein Filmscharnier mit einem Basiselement 24 des Endstückes 6 verbunden ist.. Dadurch kann es später, wenn das Basiselement 24 mit dem seitlichen Rahmenteil 4 verrastet ist, einen oberen Abschluss der Kammer bilden. An das Abdeckelement 17 sind Dichtungen 19 angeformt, die vorzugsweise auf einem Butyl basieren. Derartige Dichtungen können in einem Zwei-Komponenten-Spritzverfahren bei der Herstellung des Endstückes 6 als Kunststoffspritzteil direkt an dieses angeformt werden. Nach vorne ist die Kammer offen, um Wasser aus dem Wasserkanal 11 aufzunehmen.

Figur 3 zeigt die Anordnung aus seitlichem Rahmenteil 4 und Endstück 6 nach dem Verrasten über die Schnapper 15 und 16. Der Wasserkanal 11 ist nun nach hinten abgeschlossen. Außerdem ist zu erkennen, dass das Stoppelement 9 eine Lage einnimmt, so dass die Führungsschiene 12 nach hinten begrenzt ist. Das Stoppelement ist über einen verhältnismäßig langen Arm 25 mit dem Rest des Basiselementes 24 verbunden. Aufgrund der elastischen Eigenschaften des verwendeten Kunststoffes kann das Stoppelement 9 nach unten in eine Montageposition gedrückt werden, so dass der Arm 25 als Federarm wirkt. Bei herunter gedrücktem Stoppelement 9 ist die Führungsschiene 12 nach hinten freigegeben, so dass ein Schiebehimmelelement eingeführt oder herausgeschoben werden kann. Nach dem Hereinbeziehungsweise Herausschieben des Deckelelementes federt das Stoppelement 9 automatisch in seine ursprüngliche Position, die Verriegelungsposition zurück, in der es die Führungsschiene 12 nach hinten begrenzt. Der Arm 25, durch den das Stoppelement 9 mit dem Rest des Basiselementes 24 verbunden ist, ist in Längsrichtung des seitlichen Rahmenteils 4 mittels seiner Geometrie steifer ausgebildet, so dass das Stoppelement 9 ein ungewolltes Herausbewegen des Deckelelementes zuverlässig blockiert. Eine Restflexibilität ist jedoch vorhanden, so dass das Stoppelement 9 beim Abbremsen der Zurückbewegung eines Schiebehimmelelements wie ein sehr weicher Gummi wirkt. Dies ist vorteilhaft, da dabei keine Geräusche wie bei einem harten Anschlag entstehen.

Die Flexibilität des Stoppelementes 9 ist besonders vorteilhaft, weil die Reihenfolge der Montageschritte, die sonst üblich ist, umgekehrt werden kann. Normälerweise wird zunächst ein Schiebehimmelelement eingeschoben und sodann ein Stoppelement montiert. Es muss also von vornherein festgelegt sein, welche Farbe das Schiebehimmelelement haben soll. Ein nachträglicher Austausch ist nicht mehr ohne weiteres möglich. Der erfindungsgemäße Rahmen kann jedoch mit dem Endstück vormontiert werden und das Schiebehimmelelement lässt sich ohne weiteres nachträglich einführen. Ebenso ist es möglich, das Deckelelement später zu tauschen, beispielsweise wenn es verschmutzt oder beschädigt ist.

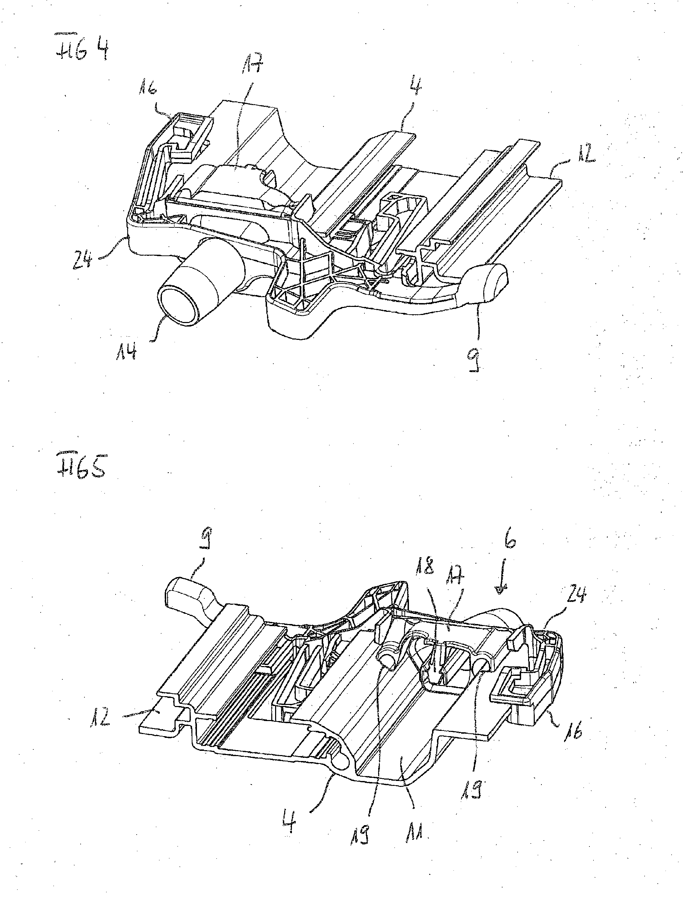

In der Figur 4 ist die Anordnung von Figur 3 nach dem Herunterklappen des Abdeckelementes 17 dargestellt. Die Kammer ist nun auch nach oben abgeschlossen. In der Figur 5 ist die Anordnung von Figur 4 von der anderen Seite her gezeigt. Hier ist zu erkennen, dass das Abdeckelement 17 zusammen mit dem seitlichen Rahmenteil 4 und dem Basiselement 24 des Endstücks 6 eine Kammer bildet. Zudem sind die Dichtungen 19 zu erkennen, welche das Abdeckelement gegenüber dem seitlichen Rahmenteil 4 abdichten. Das Abdeckelement 17 wird über eine Rastverbindung mit einem Clip 18 in der heruntergeklappten Position gehalten. Insbesondere wird eine kleine Vorspannung zwischen dem Abdeckelement 17 und dem seitlichen Rahmenteil 4 erzeugt. Dadurch wird die Relativbewegung nach der Montage minimiert, welche sonst die Dichtigkeit negativ beeinflussen könnte.

Die Dichtungen 19, welche vorzugsweise als Butylraupen realisiert sind, werden bei der erfindungsgemäßen Ausführung eines Endstückes nur zusammengedrückt, nicht aber auf Scherung beansprucht. Dadurch wird eine optimale Haftung des Butyls auf dem seitlichen Rahmenteil 4 gewährleistet. Bei einer Belastung durch Scherung würde das Butyl abgeschält werden und die Haftung zwischen Butyl und seitlichem Rahmenteil 4 wäre nur sehr schlecht.

Insgesamt ist vorteilhaft, dass für die Bearbeitung des seitlichen Rahmenteiles keine Fräsoperationen notwendig sind, welche aufwändig und damit teuer sind. Die gebildete Kammer verhindert zuverlässig die Leckage bei Schwallwasser. Das Prinzip kann für verschiedenste Profile von Führungsschienen und Rahmenseitenteilen genutzt werden und ist somit universell einsetzbar.

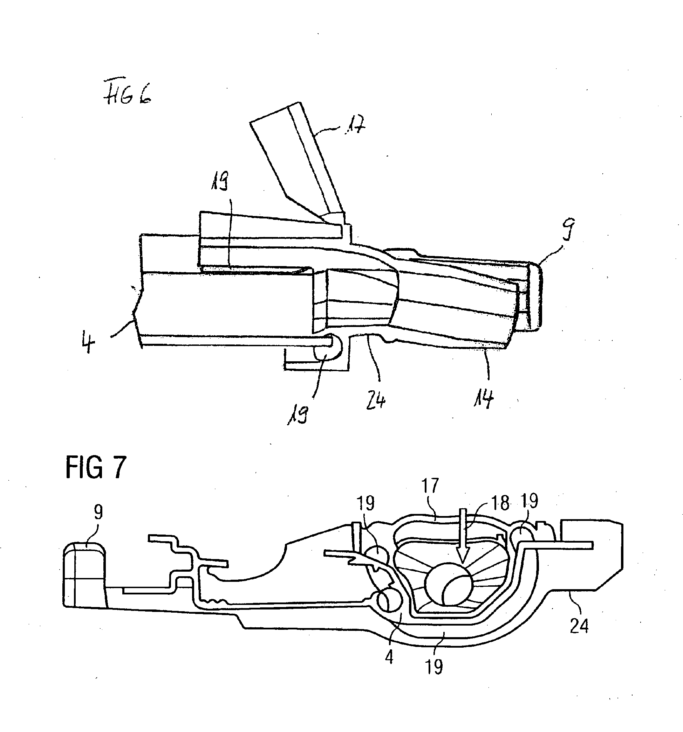

Die Figuren 6 und 7 zeigen Schnittdarstellungen, in denen die Lage der Dichtungen zu erkennen ist. Figur 6 zeigt einen Querschnitt durch das seitliche Rahmenteil, so dass die Lage der Dichtung relativ zu dem Endstück 6 und zu dem seitlichen Rahmenteil 4 zu-erkennen ist. In der Figur 7 ist ein Längsschnitt dargestellt, der die untere Dichtung zeigt. Dort ist in dem Basiselement des Endstückes 6 eine Nut vorgesehen, in der sich die Dichtung befindet. Die hintere Kante des seitlichen Rahmenteiles 4 erstreckt sich in die Nut herein, so dass sich eine dichte Verbindung zwischen dem Basiselement 24 und dem seitlichen Rahmenteil 4 ergibt.

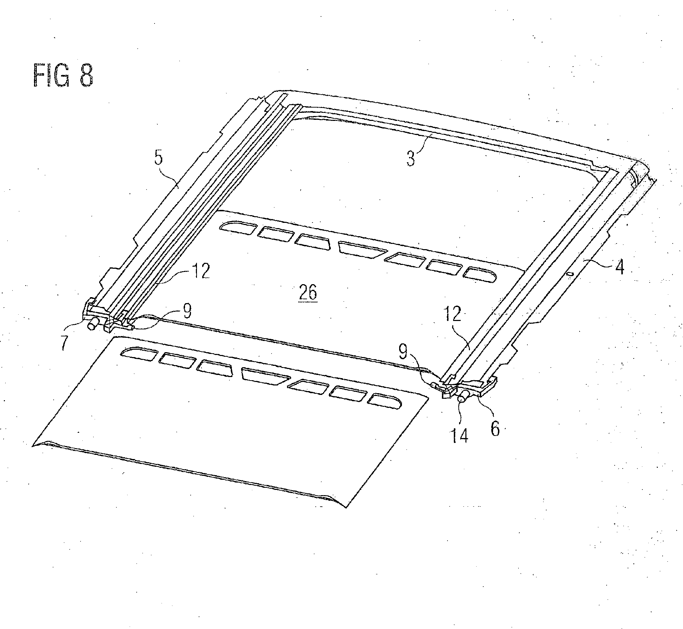

Die Figur 8 zeigt eine perspektivische Ansicht, in der ein Schiebehimmelelement 26 in Positionen vor und nach der Montage zu sehen ist. Insbesondere ist erkennbar, dass eine Herausbewegung aus den Führungsschienen 12 durch die Stoppelemente 9 verhindert ist.

## Patentansprüche

1. Rahmen (1) eines öffnungsfähigen Fahrzeugdaches mit zwei seitlich einer Dachöffnung verlaufenden Rahmenteilen (4, 5), die durch je ein am hinteren Ende des Rahmenteiles (4, 5) angeordnetes Endstück (6, 7) begrenzt werden,
**dadurch gekennzeichnet, dass**
an das Endstück (6, 7) ein federnd gelagertes Stoppelement (9) angeformt ist, welches sich in den Bereich zwischen den Rahmenteilen (4, 5) erstreckt, wobei
an einem Basiselement (24) des Endstücks (6, 7) ein Arm (25) angeformt ist, an dessen anderem Ende das Stoppelement (9) angeformt ist, so dass das Basiselement (24), der Arm (25) und das Stoppelement (9) einstückig ausgebildet sind, und der Arm (25) in Fahrzeuglängsrichtung steifer ist als senkrecht zur Ebene der Dachöffnung.

2. Rahmen nach Anspruch 1,
**dadurch gekennzeichnet, dass**
die Endstücke (6, 7) jeweils ein Basiselement (24) aufweisen, welches an dem seitlichen Rahmenteil (4, 5) befestigt ist,
und ein Abdeckelement (17) aufweisen, welches in einer montierten Position an dem seitlichen Rahmenteil (4, 5) derart angeordnet ist, dass am hinteren Ende des Rahmenteils (4, 5) jeweils eine Kammer gebildet ist.

3. Rahmen nach Anspruch 2,
**dadurch gekennzeichnet, dass**
das Abdeckelement (17) beweglich mit dem Basiselement (24) verbunden ist.

4. Rahmen nach Anspruch 3,
**dadurch gekennzeichnet, dass**
die bewegliche Verbindung durch ein Filmscharnier gegeben ist.

5. Rahmen nach einem der Ansprüche 2 bis 4,
**dadurch gekennzeichnet, dass**
zwischen dem Abdeckelement (17) und dem Rahmenteil (4, 5) mindestens eine Dichtung (19) angeordnet ist.

6. Rahmen nach einem der Ansprüche 1 bis 5,
**dadurch gekennzeichnet, dass**
sich zwischen der Hinterkante der Rahmenteile (4, 5) und einer dieser zugewandten Anlauffläche am Endstück (6, 7) mindestens eine Dichtung befindet.

7. Rahmen nach einem der Ansprüche 1 bis 6,
**dadurch gekennzeichnet, dass**
die mindestens eine Dichtung (19) fest am Endstück (6, 7) angeordnet ist.

8. Rahmen nach Anspruch 7,
**dadurch gekennzeichnet, dass**
die mindestens eine Dichtung (19) im Zwei-Komponenten-Spritzverfahren bei der Herstellung des Endstückes (6, 7) als Kunststoffspritzteil direkt an dieses angeformt ist.

9. Rahmen nach Anspruch 8,
**dadurch gekennzeichnet, dass**
die mindestens eine Dichtung aus einem Butyl-basierten Material besteht.

10. Rahmen nach einem der Ansprüche 1 bis 9,
**dadurch gekennzeichnet, dass**
die Endstücke (6, 7) jeweils in Längsrichtung eines seitlichen Rahmenteils (4, 5) auf dieses aufgesetzt und
mittels einer Rastverbindung (10, 13, 15, 16) befestigt sind.

11. Rahmen nach einem der Ansprüche 1 bis 10,
**dadurch gekennzeichnet, dass**
die seitlichen Seitenteile (4, 5) Kanäle (11) zur Ableitung eindringenden Wassers aufweisen und die Endstücke (6, 7) Anschlussstücke (14) aufweisen zur Befestigung eines Wasserablaufschlauches.

12. Verfahren zur Montage eines Rahmens eines öffnungsfähigen Fahrzeugdaches nach einem der Ansprüche 1 bis 11 mit den folgenden Schritten in der genannten Reihenfolge:
Befestigung des Endstückes (6, 7) an dem hinteren Ende des seitlich der Dachöffnung verlaufenden Rahmenteiles (4, 5),
Bewegen des federnd am Endstück (6, 7) gelagerten Stoppelements (9) nach unten in eine Montageposition, wobei der Arm (25) als Federarm wirkt, in der eine Führungsschiene (12) der seitlichen Rahmenteile (4, 5) freigegeben ist,
Einschieben eines Schiebehimmelelements (23), Bewegen des Stoppelements (9) in eine Verriegelungsposition, so dass das Schiebehimmelelement (23) gegen Herausbewegung aus der Führungsschiene (12) gesichert ist.

13. Verfahren nach Anspruch 12,
**gekennzeichnet durch** Ausführung des folgenden Schrittes, nachdem das Endstück (6, 7) an dem seitlichen Rahmenteil befestigt wurde:
Aufsetzen eines Abdeckelementes (17) zur Bildung einer Kammer aus einem seitlichen Rahmenteil (4, 5), dem Basiselement (24) und dem Abdeckelement (17).

## Claims

1. Frame (1) of an openable vehicle roof comprising two frame parts (4, 5) extending to the side of a roof opening, said frame parts being defined by a respective end piece (6, 7) arranged on the rear end of the frame part (4, 5), **characterized in that** a resiliently mounted stop element (9) is integrally formed on the end piece (6, 7), said stop element extending in the region between the frame parts (4, 5), wherein an arm (25) is integrally formed on a base element (24) of the end piece (6, 7), the stop element (9) being integrally formed on the other end thereof so that the base element (24), the arm (25) and the stop element (9) are formed in one piece, and the arm (25) is more rigid in the longitudinal direction of the vehicle than perpendicular to the plane of the roof opening.

2. Frame according to Claim 1, **characterized in that** the end pieces (6, 7) comprise a respective base element (24) which is fastened to the lateral frame part (4, 5) and comprise a cover element (17) which is arranged in a mounted position on the lateral frame part (4, 5) such that a respective chamber is formed at the rear end of the frame part (4, 5).

3. Frame according to Claim 2, **characterized in that** the cover element (17) is movably connected to the base element (24).

4. Frame according to Claim 3, **characterized in that** the movable connection is provided by a film hinge.

5. Frame according to one of Claims 2 to 4, **characterized in that** at least one seal (19) is arranged between the cover element (17) and the frame part (4, 5).

6. Frame according to one of Claims 1 to 5, **characterized in that** at least one seal is located between the rear edge of the frame parts (4, 5) and a contact surface facing said rear edge on the end piece (6, 7).

7. Frame according to one of Claims 1 to 6, **characterized in that** the at least one seal (19) is fixedly arranged on the end piece (6, 7).

8. Frame according to Claim 7, **characterized in that** during manufacture of the end piece (6, 7) the at least one seal (19) is directly formed thereon as a plastics injection-molded part in a two-component injection-molding method.

9. Frame according to Claim 8, **characterized in that** the at least one seal consists of a butyl-based material.

10. Frame according to one of Claims 1 to 9, **characterized in that** in the longitudinal direction of a lateral frame part (4, 5) the end pieces (6, 7) are respectively positioned thereon and are fastened by means of a latching connection (10, 13, 15, 16).

11. Frame according to one of Claims 1 to 10, **characterized in that** the lateral side parts (4, 5) comprise channels (11) for discharging water which has penetrated and the end pieces (6, 7) comprise connecting pieces (14) for fastening a water discharge pipe.

12. Method for mounting a frame of an openable vehicle roof according to one of Claims 1 to 11, having the following steps in the stated sequence:
fastening the end piece (6, 7) to the rear end of the frame part (4, 5) extending to the side of the roof opening, moving the stop element (9) mounted resiliently on the end piece (6, 7) downward into a mounting position, wherein the arm (25) acts as a sprung arm, in which mounting position a guide rail (12) of the lateral frame parts (4, 5) is released,
inserting a sliding roof element (23),
moving the stop element (9) into a locked position so that the sliding roof element (23) is secured against moving out of the guide rail (12).

13. Method according to Claim 12, **characterized by** carrying out the following step, after the end piece (6, 7) has been fastened to the lateral frame part:
positioning a cover element (17) to form a chamber from a lateral frame part (4, 5), the base element (24) and the cover element (17).

## Revendications

1. Cadre (1) d'un toit ouvrant de véhicule avec deux parties de cadre (4, 5) s'étendant latéralement à une ouverture de toit, qui sont limitées respectivement par une pièce d'extrémité (6, 7) disposée à l'extrémité arrière de la partie de cadre (4, 5), **caractérisé en ce qu'**un élément d'arrêt (9) supporté élastiquement est formé sur la pièce d'extrémité (6, 7), et s'étend dans la région comprise entre les parties de cadre (4, 5), dans lequel un bras (25) est formé sur un élément de base (24) de la pièce d'extrémité (6, 7), à l'autre extrémité duquel l'élément d'arrêt (9) est formé, de telle manière que l'élément de base (24), le bras (25) et l'élément d'arrêt (9) soient réalisés en une seule pièce, et le bras (25) est plus rigide dans la direction longitudinale du véhicule que perpendiculairement au plan de l'ouverture de toit.

2. Cadre selon la revendication 1, **caractérisé en ce que** les pièces d'extrémité (6, 7) présentent respectivement un élément de base (24), qui est fixé à la partie de cadre latérale (4, 5), et présentent un élément de recouvrement (17), qui est disposé, dans une position montée sur la partie de cadre latérale (4, 5), de telle manière qu'une chambre soit respectivement formée à l'extrémité arrière de la partie de cadre (4, 5).

3. Cadre selon la revendication 2, **caractérisé en ce que** l'élément de recouvrement (17) est relié de façon mobile à l'élément de base (24).

4. Cadre selon la revendication 3, **caractérisé en ce que** la liaison mobile est assurée par une charnière pelliculaire.

5. Cadre selon l'une quelconque des revendications 2 à 4, **caractérisé en ce qu'**au moins un joint d'étanchéité (19) est disposé entre l'élément de recouvrement (17) et la partie de cadre (4, 5).

6. Cadre selon l'une quelconque des revendications 1 à 5, **caractérisé en ce qu'**il se trouve au moins un joint d'étanchéité entre l'arête arrière des parties de cadre (4, 5) et une face d'approche tournée vers celle-ci sur la pièce d'extrémité (6, 7).

7. Cadre selon l'une quelconque des revendications 1 à 6, **caractérisé en ce que** ledit au moins un joint d'étanchéité (19) est disposé de façon fixe sur la pièce d'extrémité (6, 7).

8. Cadre selon la revendication 7, **caractérisé en ce que** ledit au moins un joint d'étanchéité (19) est formé directement sur la pièce d'extrémité (6, 7), lors de la fabrication de celle-ci, sous forme de pièce injectée en matière plastique par un procédé d'injection à deux composants.

9. Cadre selon la revendication 8, **caractérisé en ce que** ledit au moins un joint d'étanchéité se compose d'un matériau à base de butyle.

10. Cadre selon l'une quelconque des revendications 1 à 9, **caractérisé en ce que** les pièces d'extrémité (6, 7) sont posées respectivement sur une partie de cadre latérale (4, 5), dans la direction longitudinale de celle-ci et sont fixées au moyen d'un assemblage à déclic (10, 13, 15, 16).

11. Cadre selon l'une quelconque des revendications 1 à 10, **caractérisé en ce que** les parties de cadre latérales (4, 5) présentent des canaux (11) pour l'évacuation de l'eau de pénétration et les pièces d'extrémité (6, 7) présentent des pièces de raccordement (14) pour la fixation d'un tuyau d'écoulement de l'eau.

12. Procédé pour le montage d'un cadre d'un toit ouvrant de véhicule selon l'une quelconque des revendications 1 à 11 avec les étapes suivantes dans l'ordre indiqué:
fixation de la pièce d'extrémité (6, 7) à l'extrémité arrière de la partie de cadre (4, 5) s'étendant latéralement à l'ouverture de toit,
déplacement de l'élément d'arrêt (9) supporté élastiquement sur la pièce d'extrémité (6, 7) vers le bas dans une position de montage, le bras (25) agissant comme un bras élastique, dans laquelle un rail de guidage (12) des parties de cadre latérales (4, 5), est libéré,
introduction d'un élément de ciel coulissant (23),
déplacement de l'élément d'arrêt (9) dans une position de verrouillage, de telle manière que l'élément de ciel coulissant (23) soit bloqué contre un mouvement de sortie hors du rail de guidage (12).

13. Procédé selon la revendication 12, **caractérisé par** l'exécution de l'étape suivante, après que la pièce d'extrémité (6, 7) ait été fixée à la partie de cadre latérale:
pose d'un élément de recouvrement (17) pour la formation d'une chambre composée d'une partie de cadre latérale (4, 5), de l'élément de base (24) et de l'élément de recouvrement (17).
